# EUROPEAN PATENT APPLICATION

(11) **EP 2 898 984 A1**
(43) Date of publication of application: **29.07.2015**
(21) Application number: 13856036.2
(22) Date of filing: 26.06.2013
(51) Int. Cl.: B23Q 15/00, G05B 19/404

(54) **INTERFACE SYSTEM OF INDUSTRIAL MACHINE**

(30) Priority: 14.11.2012 JP 2012249975
(71) Applicant: Mitsubishi Heavy Industries, Ltd., Tokyo 108-8215 (JP)
(72) Inventor: HONDA, Shigeru, Tokyo 108-8215 (JP)
(74) Representative: Henkel, Breuer & Partner
(86) International application number: PCT/JP2013/067447
(87) International publication number: WO 2014/076996

(57) **Abstract**

This interface system comprises a processing program computer (11) for inputting default values in advance as parameters pertaining to an industrial machine (21) and creating a program that describes the movement of the industrial machine (21), the industrial machine (21) for moving a tool according to the program to process a workpiece into a predetermined shape, a detection means (40) for automatically detecting correction values of the parameters pertaining to the industrial machine (21) in the processing program on the basis of the actual condition of the industrial machine (21), and an interface part (50) for delivering to the computer (11) corrective information detected by the detection means (40) in a format that can be understood by the computer (11) ; therefore, parameters that reflect the actual condition of the industrial machine can be inputted into the program.

## Description

### TECHNICAL FIELD

The present invention relates to a system for interfacing a machine tool and an external device.

### BACKGROUND ART

Many external devices (peripheral devices) are connected to a machine tool and the machine tool can operate and perform machining by being provided with information from the external devices. However, conditions are rarely clear in advance and feedback is actually obtained from machining results.

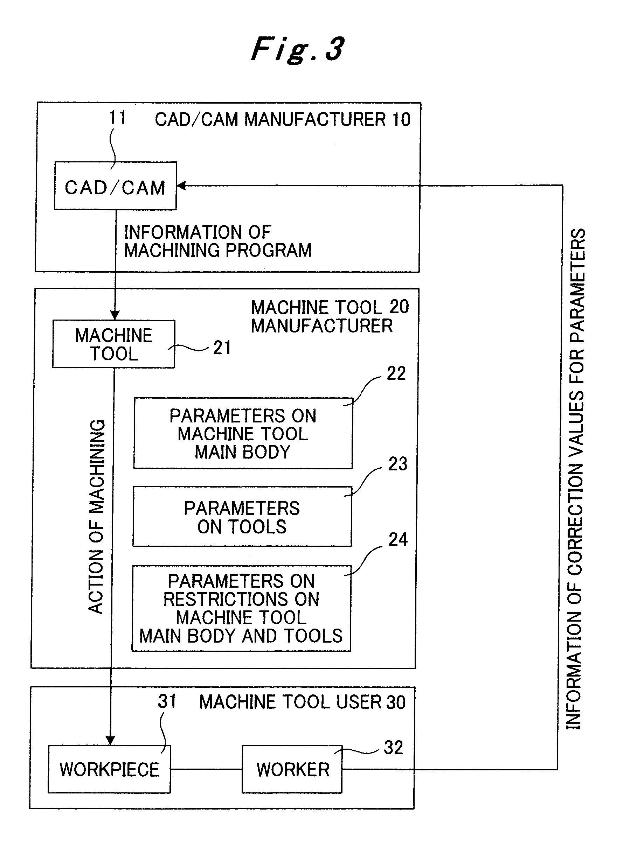

An example of this is shown in Fig. 3. Fig. 3 shows relationships among a CAD/CAM manufacturer 10, a machining manufacturer 20, and a machining user 30.

CAM is an acronym of computer aided manufacturing and CAD is an acronym of computer aided design. In the following description, CAD/CAM refers to a machining program creating computer which creates a machining program describing a way (= procedure of machining) of operating the machine tool, and a manufacturer manufacturing this computer is referred to as the CAD/CAM manufacturer 10.

As shown in Fig. 3, in the CAD/CAM manufacturer 10, the machining program describing the way of operating the machine tool is created by a CAD/CAM 11.

Regarding parameters on the machine tool in the machining program describing the way of operating the machine tool, ideal values are pre-inputted as default values. The default values do not necessarily reflect an actual condition of the machine tool.

Moreover, as shown in Fig. 3, in the machine tool manufacturer 20, information of the machining program created by the CAD/CAM 11 is installed into a machine tool 21, and the machine tool 21 configured to machine a workpiece into a required shape by moving tools according to the machining program is thereby manufactured.

Here, the parameters on the machine tool 21 in the machining program include three types of parameters of parameters 22 on a machine tool main body, parameters 23 on the tools, and parameters 24 on restrictions on the machine tool main body and the tools.

Characteristics of the parameters 22 on the machine tool main body include a point that the parameters vary among the machine bodies even in the same type of machine tool and a point that the parameters change even in the same machine body due to aging.

Characteristics of the parameters 23 on the tools include a point that machining is performed with the tools being replaced with the progress of machining (not all of machining processes are performed by using one tool) and a point that the parameters change even in the same tool due to aging and depending on an attachment state to the machine tool.

Characteristics of the parameters 24 on the restrictions on the machine tool main body and the tools include a point that a tool trajectory necessary to form a required shape cannot be achieved in some cases due to the restrictions on the machine tool and the tool (for example, chattering occurs in a given position, posture, and protruding amount of the tool due to insufficient stiffness of the machine tool and the tool).

Default values pre-inputted as the parameters 22, 23, 24 into the machining program are ideal values and do not represent the actual condition of the machine tool 21. However, correction of the default values is not actually reflected in the program.

Meanwhile, as shown in Fig. 3, in the machine tool user 30, the machine tool manufactured by the machine tool manufacturer 20 performs an action of machining on a workpiece 31 and information on an actual workpiece shape is obtained from a measurement result of the dimensions of the machined workpiece 31 and the like. A worker 32 compares the actual workpiece shape and a target workpiece shape to determine correction values of the aforementioned parameters.

Then, when the worker 32 obtains the correction values of the aforementioned parameters, the correction values are fed back to the CAD/CAM manufacturer 10 as information of the correction values of the parameters, and the parameters in the machining program are corrected based on the correction values.

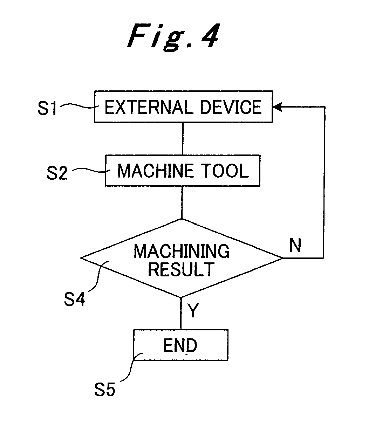

In summary, as shown in the flowchart of Fig. 4, in step S1, the CAD/CAM manufacturer 10 first creates the machining program describing the way of operating the machine tool by using the external device (= CAD/CAM 11) and then, in step S2, the machine tool manufacturer 20 installs the machining program created in the external device into the machine tool 21.

Then, in step S3, the machine tool user 30 uses the machine tool 21 to move the tool according to the aforementioned machining program and machine the workpiece (= workpiece 31) into a required shape and determines whether the machining result on the actual workpiece shape satisfies tolerances for the target workpiece shape.

When the machining result satisfies the tolerances, the processing is terminated in step S4. Meanwhile, when the machining result does not satisfy the tolerances, the correction values of the aforementioned parameters are fed back from the machine tool user 30 to the CAD/CAM manufacturer 10 repeatedly until the machining result satisfies the tolerances.

As described above, the correction values of the parameters are repeatedly fed back to the external device, and the time and cost required to perform actual machining are great. There is a demand to minimize the time and cost.

Specifically, for a job shop which produces a different type of workpiece every time and a machine tool user who produces many types of products in a small number, it is best to eliminate the repeated feedback of the correction values of the parameters to the external device. Even if such repeated feedback cannot eliminated, there is a demand to reduce the number of times of repeated feedback and allow a user to get started with the machining more quickly.

In Patent Document 1, a machining related information generating device and a numerical control apparatus including this machining related information generating device are developed, the machining related information generating device configured to automatically generate machining related information constituted of: tool pass data including data such as a movement route and cutting conditions of a tool in a NC machine tool; and other types of data on the machining.

### PRIOR ART DOCUMENT

### PATENT DOCUMENT

Patent Document 1: Japanese Patent Application Publication No. 2002-189510

### SUMMARY OF THE INVENTION

### PROBLEMS TO BE SOLVED BY THE INVENTION

If detailed information and the like on the tool actually used in machining are provided on the CAD/CAM manufacturer 10 side in the creation of the machining program, it is possible to calculate and create more accurate machining program in advance. For example, use of a device which accurately measures the tool length and the tool diameter enables feedback of tool measurement results which are accurate and which have high reproducibility. Accordingly, sharing of this information with the external device can reduce the machining program creation time. Furthermore, there is also an advantage of preventing erroneous input by an operator (programmer).

The present invention has been made in view of the conventional techniques described above, and an object thereof is to provide an interface system capable of inputting parameters reflecting an actual condition on a machine tool side into a machining program describing a way of operating the machine tool.

### MEANS FOR SOLVING THE PROBLEMS

An interface system for a machine tool of a first aspect of the invention for solving the problems described above is characterized in that the interface system comprises: a machining program creating computer configured to create a machining program with a default value being pre-inputted as a parameter on the machine tool, the machining program describing a way of operating a machine tool; the machine tool configured to machine a workpiece into a predetermined shape by moving a tool according to the machining program; detecting means for automatically detecting a compensation value of the parameter on the machine tool in the machining program on the basis of an actual condition of the machine tool; and an interface part configured to send the compensation value detected by the detecting means to the computer in a format recognizable by the computer, and the computer has a function of compensating the default value in order that the actual condition is reflected on the parameter on the machine tool on the basis of the compensation value received from the interface part.

An interface system for a machine tool of a second aspect of the invention for solving the problems described above is characterized in that the interface system comprises: a machine tool configured to machine a workpiece into a predetermined shape by moving a tool according to a machining program which is created with a default value being pre-inputted as a parameter on the machine tool and which describes a way of operating the machine tool; detecting means for automatically detecting a compensation value of the parameter on the machine tool in the machining program on the basis of an actual condition of the machine tool; and an interface part configured to send the compensation value detected by the detecting means to a machining program creating computer in a format recognizable by the computer, the computer having created the machining program.

An interface system for a machine tool of a third aspect of the invention for solving the problems described above is the interface system of the first or second aspect characterized in that a parameter on a main body of the machine tool, a parameter on a tool of the machine tool, and a parameter on restrictions on the main body and the tool of the machine tool are used as the parameter on the machine tool.

An interface system for a machine tool of a fourth aspect of the invention for solving the problems described above is the interface system of the first or second aspect characterized in that the computer has a function of correcting the default value on the basis of a correction value of the parameter which is obtained by comparing a target workpiece shape and an actual workpiece shape of a workpiece machined by the machine tool.

### EFFECT OF THE INVENTION

In the interface system for the machine tool of the first aspect of the invention, the detecting means automatically detects the parameter on the machine tool as the compensation value showing the actual condition of the machine tool, and interface part sends the detected compensation value to the machining program computer in the format recognizable by the machining program computer. Accordingly, the interface system of the first aspect has an effect that the machining program computer can create the machining program with the parameter reflecting the actual condition of the machine tool being inputted.

The interface system for the machine tool of the second aspect of the invention has an effect that the detecting means can automatically detect the parameter on the machine tool as the compensation value showing the actual condition of the machine tool, and the interface part can send the detected compensation value to the machining program computer in the format recognizable by the machining program computer.

The interface system for the machine tool of the third aspect of the invention has, in addition to the same effect as that of the first or second aspect, an effect that the machining program can be created with the parameter reflecting the actual condition of the machine tool being inputted, where the parameter on the main body of the machine tool, the parameter on the tool of the machine tool, and the parameter on the restrictions on the main body and the tool of the machine tool are used as the parameter on the machine tool.

The interface system for the machine tool of the fourth aspect of the invention has, in addition to the same effect as that of the first or second aspect, an effect that the machining program computer can correct the default value on the basis of the correction value of the parameter on the machine tool which is obtained by comparing the target workpiece shape and the actual workpiece shape of the workpiece machined by the machine tool.

### BRIEF DESCRIPTION OF THE DRAWINGS

[Fig. 1] Fig. 1 is a block diagram showing an interface system for a machine tool in one embodiment of the present invention.
[Fig. 2] Fig. 2 is a flowchart showing an operation procedure of the interface system for a machine tool in the one embodiment of the present invention.
[Fig. 3] Fig. 3 is a block diagram of a conventional technique.
[Fig. 4] Fig. 4 is a flowchart showing an operation procedure of a conventional technique.

### MODE FOR CARRYING OUT THE INVENTION

The present invention is described below in detail with reference to an embodiment shown in the drawings.

### EMBODIMENT 1

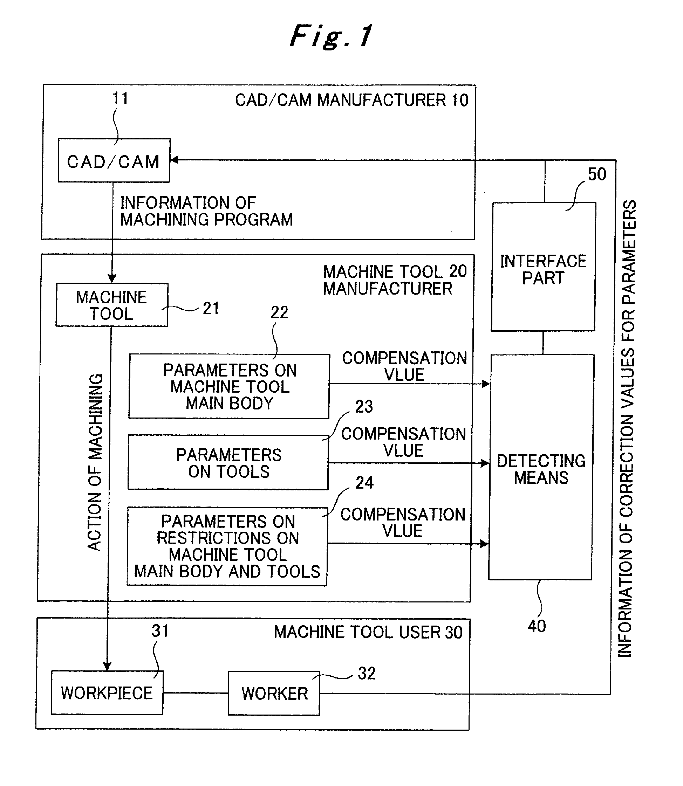

One embodiment of the present invention is shown in Fig. 1.

Fig. 1 shows relationships among a CAD/CAM manufacturer 10, a machining manufacturer 20, and a machining user 30 which use an interface system for a machine tool in the embodiment of the present invention.

As shown in Fig. 1, in the CAD/CAM manufacturer 10, a machining program describing a way of operating the machine tool is created by a CAD/CAM 11.

Regarding parameters on the machine tool in the machining program describing the way of operating the machine tool, ideal values are pre-inputted as default values. The default values do not reflect an actual condition on the machine tool side.

Moreover, as shown in Fig. 1, in the machine tool manufacturer 20, information of the machining program created by the CAD/CAM 11 is installed into a machine tool 21, and the machine tool 21 configured to machine a workpiece into a required shape by moving tools according to the machining program is thereby manufactured.

In this case, the parameters on the machine tool 21 in the machining program include three types of parameters of parameters 22 on a machine tool main body, parameters 23 on the tools, and parameters 24 on restrictions on the machine tool main body and the tools.

Characteristics of the parameters 22 on the machine tool main body include a point that the parameters vary among the machine bodies even in machine tools of the same type and a point that the parameters change even in the same machine body due to aging. Examples of the machine tool include a gear grinding machine, a five-face machining center, a horizontal boring machine, and the like. The parameters 22 on the machine tool main body generally include specifications of the machine tool. Parameters for each type of machine include tool information, workpiece information, measurement information, a time constant, spindle information, and the like in a case of a three-axis MC and a five-axis MC.

Characteristics of the parameters 23 on the tools include a point that machining is performed with the tools being replaced with the progress of machining (all of machining processes are not performed by using one tool) and a point that the parameters change even in the same tool due to aging and depending on an attachment state to the machine tool. The parameters 23 on the tools typically include tool diameters, tool lengths, and the like of various tools and also include values thereof after aging.

Characteristics of the parameters 24 on the restrictions on the machine tool main body and the tools include a point that a tool trajectory necessary to form a required shape cannot be achieved in some cases due to the restrictions on the machine tool and the tools (for example, chartering occurs in a given position, posture, and protruding amount of the tool due to insufficient stiffness of the machine tool and the tools) . The parameters 24 on the restrictions on the machine tool main body and the tools include information for avoiding interference of the machine tool and the tools.

In the embodiment, there is provided detecting means 40 for automatically detecting compensation values of the parameters on the machine tool 21 in the machining program, on the basis of the actual condition of the machine tool 21 in the machine tool manufacturer 20.

For example, compensation values of the parameters on the tool diameter and the tool length can be detected by using, as the detecting means 40, a tool measurement device configured to measure the tool diameter and the tool length by optically capturing an image of the tool of the machine tool 21.

In a case where the detecting means 40 directly detects the tool diameter and the tool length as the compensation values, the default values are replaced by the detected tool diameter and tool length in the CAD/CAM 11. Meanwhile, in a case where deviations of the detected tool diameter and tool length from the default values are used as the compensation values, it is only necessary to add (subtract) the deviations to (from) the default values in the CAD/CAM 11.

Moreover, the detecting means 40 can also detect, as the compensation values, the parameters 22, 23, 24 unique to each machine tool 21 which are stored in a database in the machine tool manufacturer 20 or stored in advance in a storage device of the machine tool 21.

Note that the detecting means 40 preferably has a function of determining whether compensation is necessary by comparing the aforementioned compensation values and the default values inputted as parameters in the machining program. This is because the default values inputted as ideal values may reflect the actual condition of the machine tool 21 by coincidence.

An interface part 50 sends the compensation values detected by the detecting means 40 to the CAD/CAM 11 in a format recognizable by the CAD/CAM 11. An input-output port in which a portion to transmit the information is specified by standards can be used as the interface part 50. The standards related to the interface part 50 need to be common in the CAD/CAM manufacturer 10 and the machine tool manufacturer 20. The interface part 50 is not limited to one using a wired network and may be one using a radio network.

The CAD/CAM 11 is additionally provided with a compensation function of compensating the default values by using these compensation values to reflect the actual condition of the machine tool 21 on the basis of the compensation values received from the interface part 50, and creates the machining program by using the compensated parameters.

In the compensation function, when the tool diameter and the tool length are directly detected as the compensation values as in the aforementioned example, the default values are replaced by the detected tool diameter and tool length. Meanwhile, when the deviations of the detected tool diameter and tool length from the default values are used as the compensation values, the deviations are added to the default values.

As shown in Fig. 1, in the machine tool user 3 0 , the machine tool manufactured by the machine tool manufacturer 20 performs an action of machining on a workpiece 31 and information on an actual workpiece shape is obtained from a measurement result of the dimensions of the machined workpiece 31 and the like. A worker 32 compares the actual workpiece shape and a target workpiece shape to determine correction values of the aforementioned parameters.

Then, when the worker 32 obtains the correction values of the aforementioned parameters, the correction values are fed back to the CAD/CAM manufacturer 10 as information of the correction values of the parameters, and the parameters in the machining program are corrected based on the correction values.

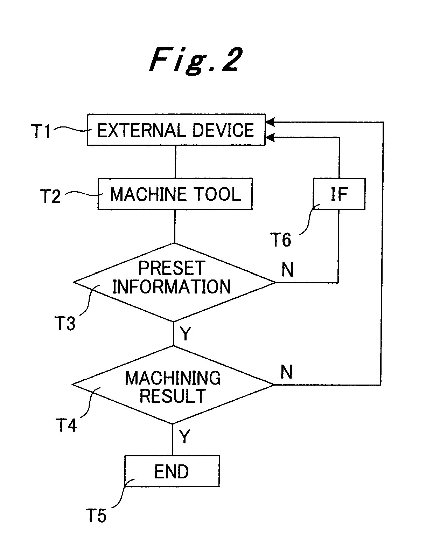

An operation procedure of the interface system for a machine tool in the embodiment is described with reference to the flowchart of Fig. 2.

First, in step T1, the CAD/CAM manufacturer 10 creates the machining program describing the way of operating the machine tool by using an external device (= CAD/CAM 11). Then, in step T2, the machine tool manufacturer 20 installs the machining program created in the external device into the machine tool 21.

Thereafter, in step T3, the machine tool manufacturer 20 determines whether values (preset information) inputted as the default values in the machining program created by the external device need to be compensated by using the compensation values detected by the detecting means 40.

When the machine tool manufacturer 20 determines that the compensation is necessary, the compensation values detected by the detecting means 40 are sent to the external device via the interface part 50 in step T6.

Meanwhile, when the machine tool manufacturer 20 determines that the compensation is unnecessary in step T3 , the machine tool user 30 machines the workpiece (= workpiece 31) into a required shape in step T4 by causing the machine tool 21 to move the tool according to the aforementioned machining program. The machine tool user 30 then determines whether the machining result of the actual workpiece shape satisfies tolerances for the target workpiece shape.

When the machining result satisfies the tolerances, the processing is terminated in step T5. Meanwhile, when the machining result does not satisfy the tolerances, the correction values of the parameters are fed back from the machine tool user 30 to the CAD/CAM manufacturer 10.

Since the compensation values of the parameters on the machine tool are detected by the detecting means 40 and sent to the external device via the interface part 50 as described above, it is possible to reduce the number of times the correction values of the parameters are fed back to the external device, the correction values being obtained by actually performing machining. Hence, there is obtained such an effect that the time and cost required for actual machining can be reduced.

Specifically, it is best to eliminate the feedback of the correction values of the parameters to the external device. Even if such repeated feedback cannot be eliminated, it is possible to satisfy a demand to reduce the number of times of repeated feedback and allow a user to get started with the machining more quickly.

Furthermore, the embodiment described above also has the following effects.

(1) An accurate calculation processing can be performed in advance by sending an accurate tool shape to the CAM/CAM side as information in advance. There is a large demand to reduce a calculation processing time in the CAM/CAM. Particularly, since offset cannot be sometimes performed in a five-axis MC, recalculation is required every time.
(2) The machine tool side has no information on the number of blades in the tool, and providing this information enables chipping measurement. The number of blades in one rotation can be checked by capturing an image of the tool.
(3) There is a module with an axis machining function of performing machining while avoiding use of a front end of a ball-end mill. When the machine tool side knows the number of degrees set in the CAM/CAM as the number of degrees at which the module is inclined in the machining, the machine tool side can know a wearing portion in machining. Accordingly, a wear measurement instruction is automated.
(4) When rectangular coordinates of rotary spindles of two axes in a five-axis MC are sent from the machine tool to the CAM/CAM as information, the coordinates can be compensated on the machining program.
(5) Setting a measurement point in a model (shape in a computer) on the CAM/CAM side and sending axes of coordinate to the machine tool side enables automatic measurement of a specified point. Furthermore, determining tolerances enables determination of whether a measurement result is allowable or not on the machine tool.
(6) Sending the parameters of the machine tool to the CAM/CAM side as information enables accurate estimation of the machining time.

### INDUSTRIAL APPLICABILITY

The present invention can be widely used in industries as a system for interfacing the machine tool and the peripheral device.

### EXPLANATION OF THE REFERENCE NUMERALS

- 10: CAM/CAM manufacturer
- 11: CAM/CAM
- 20: Machine tool manufacturer
- 21: Machine tool
- 30: Machine tool user
- 40: Detecting means
- 50: Interface part

## Claims

1. An interface system for a machine tool **characterized in that** the interface system comprises:
a machining program creating computer configured to create a machining program with a default value being pre-inputted as a parameter on the machine tool, the machining program describing a way of operating a machine tool;
the machine tool configured to machine a workpiece into a predetermined shape by moving a tool according to the machining program;
detecting means for automatically detecting a compensation value of the parameter on the machine tool in the machining program on the basis of an actual condition of the machine tool; and
an interface part configured to send the compensation value detected by the detecting means to the computer in a format recognizable by the computer, and
the computer has a function of compensating the default value in order that the actual condition is reflected on the parameter on the machine tool on the basis of the compensation value received from the interface part.

2. An interface system for a machine tool **characterized in that** the interface system comprises:
a machine tool configured to machine a workpiece into a predetermined shape by moving a tool according to a machining program which is created with a default value being pre-inputted as a parameter on the machine tool and which describes a way of operating the machine tool;
detecting means for automatically detecting a compensation value of the parameter on the machine tool in the machining program on the basis of an actual condition of the machine tool; and
an interface part configured to send the compensation value detected by the detecting means to a machining program creating computer in a format recognizable by the computer, the computer having created the machining program.

3. The interface system for a machine tool according to claim 1 or 2, **characterized in that** a parameter on a main body of the machine tool, a parameter on a tool of the machine tool, and a parameter on restrictions on the main body and the tool of the machine tool are used as the parameter on the machine tool.

4. The interface system for a machine tool according to claim 1 or 2, **characterized in that** the computer has a function of correcting the default value on the basis of a correction value of the parameter which is obtained by comparing a target workpiece shape and an actual workpiece shape of a workpiece machined by the machine tool.
